# EUROPEAN PATENT APPLICATION

(11) **EP 4 145 685 A1**
(43) Date of publication of application: **08.03.2023**
(21) Application number: 21195229.6
(22) Date of filing: 07.09.2021
(51) Int. Cl.: H02K 3/50, H02K 1/14, H02K 3/28, H02K 5/22, H02K 7/18, H02K 11/33

(54) **STATOR, ELECTRICAL MACHINE AND METHOD OF MANUFACTURING A STATOR**

(71) Applicant: ABB SCHWEIZ AG, 5400 Baden (CH)
(72) Inventor: Vartiainen, Ari, 00380 Helsinki (FI); Keitamo, Jori, 00380 Helsinki (FI); Sandholm, Klas, 00380 Helsinki (FI)
(74) Representative: Kolster Oy Ab

(57) **Abstract**

A stator of a rotating electrical machine, a rotating electrical machine and a method of manufacturing a stator. The stator comprises multiple of winding segments adapted to produce multiple of phase systems, at least one mounting box for receiving cabling from the winding segments, wherein the multiple of phase systems are formed of winding segments which are divided evenly in the circumference of the stator. The at least one mounting box comprising bus bars for multiple of phase systems, and each of the multiple of phase systems is connectable to a corresponding frequency converter in the at least one mounting box.

## Description

### FIELD OF THE INVENTION

The invention relates to a stator of a rotating electrical machine, and particularly to a stator composed of winding segments.

### BACKGROUND OF THE INVENTION

Large generators are commonly built using stator structures in which the stator winding is produced of winding segments. The segments are pre-fabricated windings which can be installed to the stator surface for producing the complete winding structure. The winding segments are connected to each other to form the desired stator winding having the desired number of poles. The stator windings are typically supplied by a frequency converter so that the energy generated with the winding can be fed further in a desired electrical form i.e. with a desired frequency.

In connection with larger machines having stators in the diameters ranging from few metres up to 10 metres, the supply of the stator with winding segments is problematic as the cables from the winding segments require lot of space near the stator. Further, when large machines are used, a common practice is to have two frequency converters for supplying the windings. In order to route the cabling from the stator segments, the stator can be divided in two parts having equal number of winding segments. One frequency converter supplies winding segments situated in the left part of the circumference of the stator and the other frequency converter supplies the right half of the winding segments.

When operating with two frequency converters, the operation can be carried out even when one of the two converters fail. For example, in a generator use it is desirable to have redundancy for maintaining operation even if one of the converters fails. However, in a large machine in which the stator windings are divided circumferentially in two problems may arise when operating with only one frequency converter. The forces due to imbalance of the produced torque affect the stator structure as a whole, and may impose high amplitude vibration and bending of structures which may lead to serious damages in the electrical machine and in it's supporting structures.

### BRIEF DESCRIPTION OF THE INVENTION

An object of the present invention is to provide a stator, an electrical machine and a method of manufacturing a stator so as to solve the above problem. The object of the invention is achieved by stator, electrical machine and method of manufacturing a stator which are characterized by what is stated in the independent claims. The preferred embodiments of the invention are disclosed in the dependent claims.

The invention is based on the idea of employing at least one mounting box in which the cabling from the stator winding segments are received. The stator winding segments, which are used for forming multiple of phase systems, are distributed evenly in circumference of the stator, and by using the at least one mounting box, the cabling from the winding segments is greatly simplified.

An advantage of the invention is that the cabling from the winding segments can be arranged in the most optimal way and at the same time the winding segments can be arranged such that redundancy in use of the electrical machine is obtained.

### BRIEF DESCRIPTION OF THE DRAWINGS

In the following the invention will be described in greater detail by means of preferred embodiments with reference to the attached drawings, in which
Figure 1 shows a schematic view of an embodiment of the present invention;
Figure 2 shows a schematic view of a mounting box; and
Figure 3 shows a perspective view of a stator and mounting boxes.

### DETAILED DESCRIPTION OF THE INVENTION

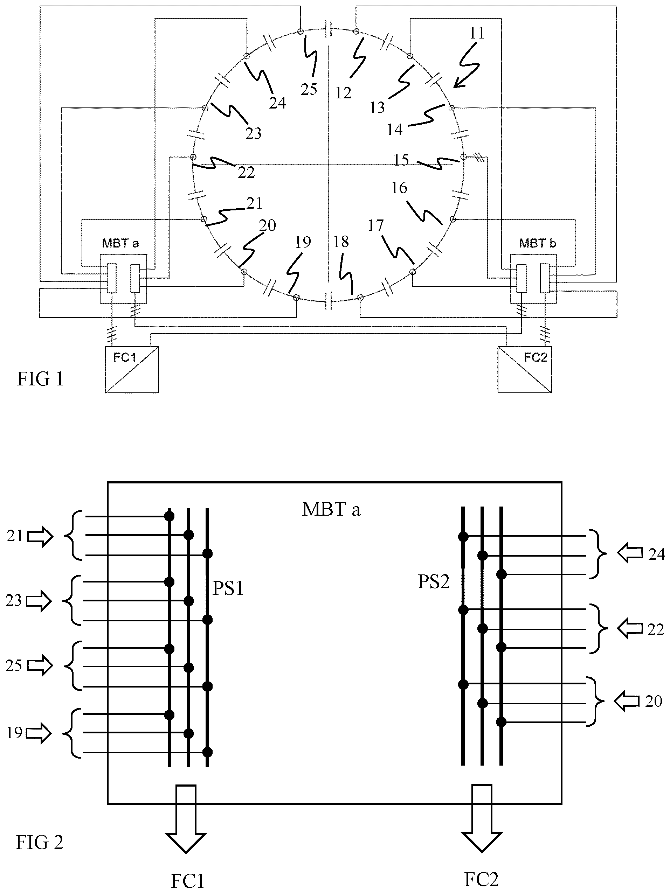

Figure 1 shows an embodiment of the stator of the invention. The stator 11 is formed of winding segments 12 - 25 in a known manner. Winding segments are pre-wound structures which can be connected electrically to form a desired winding structure. In the example of Figure 1, fourteen winding segments are shown in the circumference of a stator. The winding segments presented in Figure 1 are structures which each produce a phase system having three phases. The fourteen winding segments presented in the example may be formed of segments which are connected to each other for forming a phase system. With a phase system it is referred to a complete voltage system which produces a multi-phase voltage as such when used in a generator. In case of a three-phase system, each winding segment 12 ― 25 produces a three-phase voltage.

According to the invention, the stator comprises multiple of winding segments adapted to produce multiple of phase systems. Further, the stator of the invention comprises at least one mounting box for receiving cabling from the winding segments. Figure 1 shows an embodiment in which two mounting boxes are arranged in the structure. The as shown in Figure 1, the mounting boxes MBT a and MBT b are situated on different sides of the stator. If the stator is divided in the drawing with a vertical line in two, the mounting boxes are on different sides of the vertical line.

Further according to the invention, the multiple of phase systems are formed of segments which are divided evenly in the circumference of the stator. As mentioned above, the phase systems refer to independent phase systems having windings for all phases of the system and connection points for connecting the voltage system further. In the example of Figure 1, the phase systems are three-phase systems. When used in a generator, an independent three phase system produces a three-phase voltage.

In the invention the phase systems are divided evenly in the circumference of the stator. The example of Figure 1 has 14 segments which produce three-phase voltages. These segments are in the example arranged to produce two phase systems. As the phase systems are divided evenly, every other segment belongs to phase system PS1 and every other to phase system PS2. Thus the neighbouring segments are in different phase systems. When the segments belong to same phase system, their corresponding phases can be connected directly in parallel.

Further in the invention, the at least one mounting box comprises bus bars for multiple of phase systems. In the example of Figure 1, each of the two mounting boxes comprises bus bars for multiple of phase systems. As in the example the number of phase systems is two, the mounting boxes comprise bus bars for two phase systems. Further, as the multiphase system is a three-phase system, each mounting box has three-phase bus bars for two phase systems, i.e. six bus bars.

Figure 2 shows an example of a mounting box MBT a. The mounting box of Figure 2 is shown to receive three phase voltages from the stator segments, and the numbering of the stator segments corresponds to that shown in Figure 1.

The winding segments belonging to the same phase system can be connected in parallel and are connected in parallel in the mounting boxes. For example, in the three-phase system of Figure 1, the mounting boxes comprise bus bars for phases U1, V1, W1 of first phase system PS1 and bus bars for phases U2, V2, W2 of the second phase system PS2. This is further illustrated in Figure 2, in which bus bars of the first phase system PS1 receive three phase voltages from stator segments 21, 23, 25 and 19. Correspondingly bus bars of the second phase system PS2 receives three phase voltages from stator segments 24, 22 and 20.

In the invention and as illustrated in Figures 1 and 2, each of the multiple of phase systems is connectable to a corresponding frequency converter in the at least one mounting box. The phase systems PS1 and PS2 are connectable in the mounting box to separate frequency converters FC1 and FC2. Thus the tree-phase bus bars of the mounting boxes are connectable to frequency converters which are dedicated for separate phase systems. Figure 2 shows that the busbars of phase system PS1 are connectable to a frequency converter FC1 and the busbars of phase system PS2 are connectable to a frequency converter FC2.

With the embodiment shown in Figure 1, the physical electrical connections, i.e. the cabling, from the winding segments can be arranged in such a manner, that the stator is divided in half, and the winding segments of one half are connected to one mounting box and the winding segments of the other half are connected to the other mounting box. In the mounting boxes the phase systems are connected to separate bus bars, and from the bus bars to corresponding frequency converters. With the above structure, redundant operation is possibly due to the evenly distributed winding segments without complicated cable routing in the stator.

In the above embodiment two mounting boxes MBT a, MBT b are presented. The mounting boxes are physically situated near the two halves of the stator structure. According to an embodiment a single mounting box is arranged in the stator. A mounting box may have such dimensions that each winding segment is connectable to the mounting box at its own side of the stator structure. Basically a mounting box is extended such that one end of the mounting box is on one side of an imaginary center line dividing the stator in two halves and the other end of the mounting box is on the other side of the imaginary center line. Bus bars are arranged in the mounting box for each phase system as described above. As both phase systems are on both sides of the stator structure, the bus bars typically extend inside the mounting box for connecting each of the winding segments to the bus bars.

As further illustrated in Figure 1, the two mounting boxes are connected to frequency converters. As described above, frequency converter FC1 receives cabling of first phase system from both mounting boxes and frequency converter FC2 receives cabling of second phase system from both mounting boxes. In the example of Figure 1, the number of winding segments is shown to be 14, thus 7 segments belong to the same phase system and are connected in parallel. Figure 1 also illustrates that from each frequency converter receives 7 cables from the mounting boxes. The amount of cables from the mounting boxes refer to the fact that the currents from the winding segments should be fed to the frequency converters with cabling that has enough cross-sectional area.

According to an embodiment of the invention, the stator is an inner stator of an electrical machine. As the stator is an inner stator, the electrical machine having the stator has an outer rotor. The rotor is thus arranged to rotate around the stator. Inner stator structures are employed in specific structures, such as in wind power generators having a high power rating. According to an embodiment of the invention, the stator has a diameter higher than 5 metres. The diameter refers to the diameter measured from the surface of the stator.

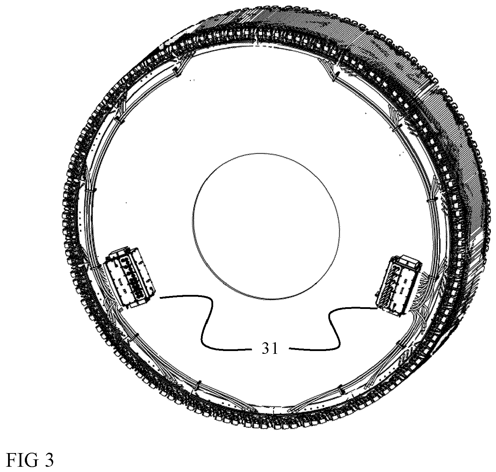

Figure 3 shows an example of stator in perspective view. The stator of Figure 3 corresponds to that of Figure 1 as the stator comprises 14 stator segments and two mounting boxes 31. Figure 3 shows also how the cabling from the stator segments is led to the mounting boxes as illustrated schematically in Figure 1.

Further, according to an embodiment of the invention, the power rating of the stator is above 5 megawatts. High-powered stators and electrical machines which employ high powered stators are typically generators used in production of wind power. However, the stator of the invention is also usable in an electrical machine which act as a motor.

The present invention relates also to a method of manufacturing a stator of a rotating electrical machine. The method comprises providing multiple of winding segments adapted to produce multiple of phase systems. The winding segments are attached to a support structure of the stator.

The method further comprises providing at least one mounting box for receiving cabling from the winding segments and forming the multiple of phase systems of segments which are divided evenly in the circumference of the stator. In the method the at least one mounting box comprises bus bars for multiple of phase systems, and each of the multiple of phase systems is connectable to a corresponding frequency converter in the at least one mounting box.

With the method of the invention, a stator structure having the advantages presented above can be formed. In the method, the cables from the winding segments are routed to at least one mounting box. The use of the mounting box in the manufacturing of the stator enables to have redundancy in the stator when multiple of frequency converters are used.

The present invention relates also to an electrical machine having the rotor. The electrical machine comprises the stator of the disclosure. The electrical machine is preferably a generator. Preferably, the generator is a wind power generator.

It will be obvious to a person skilled in the art that, as the technology advances, the inventive concept can be implemented in various ways. The invention and its embodiments are not limited to the examples described above but may vary within the scope of the claims.

## Claims

1. A stator of a rotating electrical machine, the stator comprising
multiple of winding segments adapted to produce multiple of phase systems,
at least one mounting box for receiving cabling from the winding segments,
wherein
the multiple of phase systems are formed of winding segments which are divided evenly in the circumference of the stator,
the at least one mounting box comprising bus bars for multiple of phase systems, and
each of the multiple of phase systems is connectable to a corresponding frequency converter in the at least one mounting box.

2. A stator of a rotating electrical machine according to claim 1, wherein the multiple of winding segments are adapted to produce two phase systems.

3. A stator of a rotating electrical machine according to claim 1 or 2, wherein the phase systems are three-phase systems.

4. A stator of a rotating electrical machine according to claim 1, 2 or 3, wherein the winding segments are arranged such that neighbouring winding segments belong to different phase systems.

5. A stator of a rotating electrical machine according to any one of the previous claims 1 to 4, wherein the at least one mounting box comprises bus bars for two phase systems, each phase system having three phases.

6. A stator of a rotating electrical machine according to any one of the previous claims 1 to 5, wherein the stator comprises two mounting boxes situated on both sides of the stator when the stator is divided in two halves, such that one half of the winding segments on one side of the stator are connected to a first mounting box and the other half of the winding segments on the other side of the stator are connected to a second mounting box.

7. A stator of a rotating electrical machine according to any one of the previous claims 1 to 5, wherein the stator comprises a mounting box extending on both sides of the stator when the stator is divided in two halves, such that one half of the winding segments on one side of the stator are connected to a first end of the mounting box and the other half of the winding segments on the other side of the stator are connected to a second end of the mounting box.

8. A stator of a rotating electrical machine according to any one of the previous claims 1 to 7, wherein the winding segments are connectable through at least one mounting box to two frequency converters such that each frequency converter is connectable to a different phase system.

9. A stator of a rotating electrical machine according to any one of the previous claims 1 to 8, wherein the stator has a diameter higher than 5 metres.

10. A stator of a rotating electrical machine according to any one of the previous claims 1 to 9, wherein the power rating of the stator is above 5 megawatts.

11. A method of manufacturing a stator of a rotating electrical machine, the method comprising
providing multiple of winding segments adapted to produce multiple of phase systems,
providing at least one mounting box for receiving cabling from the winding segments,
forming the multiple of phase systems of winding segments which are divided evenly in the circumference of the stator, the at least one mounting box comprising bus bars for multiple of phase systems, and each of the multiple of phase systems is connectable to a corresponding frequency converter in the at least one mounting box.

12. A rotating electrical machine having the stator of any one of the previous claims 1 to 10.

13. A rotating electrical machine according to claim 12, wherein the electrical machine is a generator.

14. A rotating electrical machine according to claim 12 or 13, wherein the electrical machine has an inner stator.
